# EUROPÄISCHE PATENTSCHRIFT

(11) **EP 3 228 376 B1**
(45) Veröffentlichungstag und Bekanntmachung des Hinweises auf die Patenterteilung: **27.11.2019**
(21) Anmeldenummer: 17159282.7
(22) Anmeldetag: 06.03.2017
(51) Int. Cl.: B01D 46/10

(54) **FILTERMODUL MIT EINEM FILTERELEMENT UND EINEM BEFESTIGUNGSRAHMEN UND LUFTFILTERANLAGE MIT EINEM FILTERMODUL**
FILTER MODULE HAVING A FILTER ELEMENT AND A FASTENING FRAME AND AIR FILTER APPARATUS WITH ONE FILTER MODULE
MODULE DE FILTRATION COMPRENANT UN ÉLÉMENT DE FILTRE ET UN CADRE DE FIXATION ET INSTALLATION DE FILTRE À AIR COMPRENANT UN MODULE DE FILTRATION

(30) Priorität: 08.04.2016 DE 102016004063
(43) Veröffentlichungstag der Anmeldung: 11.10.2017
(73) Patentinhaber: Mann+Hummel GmbH, 71636 Ludwigsburg (DE)
(72) Erfinder: LULEY, Oliver, 67346 Speyer (DE); KLOSS, Andreas, 68239 Mannheim-Seckenheim (DE); STARK, Dennis, 69256 Mauer (DE)
(74) Vertreter: Seyboth, Matthias

(56) Entgegenhaltungen:
- DE-A1-102013 015 495
- DE-C1- 4 424 805
- US-A1- 2006 021 932
- US-A1- 2008 216 455

## Beschreibung

### Technisches Gebiet

Die Erfindung betrifft ein Filtermodul mit einem Filterelement zum Filtern eines Fluids und einem Befestigungsrahmen sowie eine Luftfilteranlage mit einem Filtermodul, insbesondere zur Innenraumluftfilterung, insbesondere eines Fahrzeugs.

### Stand der Technik

Ein Filterelement, das beispielsweise als Kfz-Innenraum-Luftfilter bzw. Filterelement für eine Kraftfahrzeugklimaanlage eingesetzt wird, dient dazu, die von außen in den Innenraum des Fahrzeugs geleitete und aufbereitete Luft mittels eines geeigneten Filters zu filtern. Dabei kommen beispielsweise Partikel- oder Geruchsfilter zum Einsatz oder Kombinationen davon, welche die in der Luft enthaltenen Partikel und inhärenten Gerüche aus der Umgebungsluft herausfiltern. Dabei hängt die Wirksamkeit eines Filters bzw. eines solchen Filtersystems auch davon ab, dass das Filtersystem in der richtigen Position in dem Filtergehäuse bzw. einer zugeordneten Filteraufnahme des Filtergehäuses montiert wird.

Aus der US 2006/0021932 A1 ist ein flacher Filter bekannt, welcher einen Gehäuseabschnitt umfasst, der einen Teil der Luftleitung mitbildet. Aus der DE 102013020382 A1 ist ein Filterelement mit einem Filtermedium und einem Rahmen zur Befestigung des Filterelements an oder in einem Filtergehäuse bekannt, wobei der Rahmen Rastelemente aufweist, mit denen der Rahmen zusammen mit dem Filterelement im Gehäuse verrastet werden kann.

### Offenbarung der Erfindung

Eine Aufgabe der Erfindung ist es, ein Filtermodul mit einem Befestigungsrahmen und einem Filterelement zum Filtern eines Fluids, insbesondere zur Luftfilterung, insbesondere zur Innenraumluftfilterung, zu schaffen, das es erlaubt, das Filterelement zuverlässig dicht in eine Luftfilteranlage einzusetzen und wieder zu entfernen.

Eine weitere Aufgabe ist es, eine Luftfilteranlage zum Filtern eines Fluids zur Aufnahme eines solchen austauschbaren Filtermoduls zu schaffen.

Die vorgenannte Aufgabe wird nach einem Aspekt der Erfindung gelöst von einem Filtermodul zum Filtern eines Fluids, mit wenigstens einem Filterelement und einem mit dem Filterelement bevorzugt fest verbundenen Befestigungsrahmen, das ein umlaufendes erstes Dichtelement aufweist, welches an einer Außenseite der Rahmenwand des Befestigungsrahmens angeordnet ist, wobei der Befestigungsrahmen an seiner Außenseite wenigstens ein Rastelement aufweist, und wobei ein zweites Dichtelement zum Dichten zwischen Rohseite und Reinseite am Filterelement oder am Befestigungsrahmen angeordnet ist, das mit Verrasten des wenigstens einen Rastelements in seine Dichtposition geführt ist, wobei das erste Dichtelement als Axialdichtelement und das zweite Dichtelement als Radialdichtelement ausgeführt ist.

Nach einem anderen Aspekt der Erfindung wird die weitere Aufgabe durch eine Luftfilteranlage gelöst, die zur Aufnahme eines solchen auswechselbaren Filtermoduls vorgesehen ist.

Günstige Ausgestaltungen und Vorteile der Erfindung ergeben sich aus den weiteren Ansprüchen, der Beschreibung und der Zeichnung.

Es wird ein Filtermodul zum Filtern eines Fluids vorgeschlagen, umfassend wenigstens ein Filterelement mit einem Filterbalg aus einem Filtermedium mit einer bestimmungsgemäßen Rohseite und einer dieser gegenüberliegenden bestimmungsgemäßen Reinseite, einen Befestigungsrahmen, der mit dem Filterelement verbunden ist und der einen Rand des Filterelements mit einer Rahmenwand umlaufend wenigstens teilweise umschließt, ein umlaufendes erstes Dichtelement, welches an einer Außenseite der Rahmenwand des Befestigungsrahmens angeordnet ist, wobei der Befestigungsrahmen an seiner Außenseite wenigstens ein Rastelement aufweist, wobei ein zweites Dichtelement zum Dichten zwischen Rohseite und Reinseite am Filterelement angeordnet ist, das mit Verrasten des wenigstens einen Rastelements in seine Dichtposition führbar ist. Dadurch, dass der Befestigungsrahmen zwei Dichtelemente aufweist, kann das Filtermodul beim Einbau in eine Luftfilteranlage Bauteiltoleranzen ausgleichen und gleichzeitig die Rohseite des Filterelements gegen die Reinseite abdichten. Dabei dient das erste Dichtelement am Befestigungsrahmen dem Toleranzausgleich sowie einer vibrationsfesten Befestigung in seiner Einbauposition in einer Luftfilteranlage, während das zweite Dichtelement zum Abdichten von Rohseite gegen Reinseite vorgesehen ist. Das Filtermodul kann an seiner Einbauposition verrastet und gleichzeitig abgedichtet sein. Das Filtermodul kann direkt mit einem Blechbauteil der Luftfilteranlage verrastet sein. Beispielsweise kann das erste Dichtelement ein Schaummaterial sein.

Bei dem Filterbalg handelt es sich bevorzugt um einen Flachfilterbalg, d. h. der Filterbalg hat zueinander parallele, ebene An- und Abströmflächen auf Rohseite und Reinseite, die durch die an- bzw. abströmseitigen Faltkanten gebildet werden. Die Durchströmung erfolgt dabei im Wesentlichen senkrecht zu An- und Abströmfläche. Der Befestigungsrahmen umschließt dabei die An- und Abströmflächen und/oder die Rohseite und die Reinseite des Filterbalgs.

Das wenigstens eine Rastelement kann bevorzugt innerhalb des ersten Dichtelements, d. h. senkrecht zur Durchströmungsrichtung gesehen zwischen Filterbalg und erstem Dichtelement angeordnet sein.

Das erste Dichtelement ist erfindungsgemäß ein Axialdichtelement. Als axial wird eine Richtung verstanden, die parallel zur Einbaurichtung ist. Vorliegend entspricht die Einbaurichtung für die bevorzugten Ausführungsformen der Durchströmungsrichtung des Filterelements, insbesondere des Flachfilterbalges. Somit ist das erste Dichtelement bevorzugt ausgelegt, um in Axialrichtung, d. h. bevorzugt in Einbaurichtung bzw. in Durchströmungsrichtung und/oder senkrecht zu den An- und Abströmflächen abzudichten, d. h. in Axialrichtung dichtend anleg- und elastisch verformbar zu sein. Das erste Dichtelement wird dabei durch die Bewegung des Filterelements bzw. des Filtermoduls axial verpresst.

Das zweite Dichtelement ist erfindungsgemäß ein Radialdichtelement. Als radial wird eine Richtung verstanden, die in einer Ebene senkrecht zur Einbaurichtung verläuft. Somit ist das zweite Dichtelement bevorzugt ausgelegt, um in Radialrichtung, d. h. bevorzugt senkrecht zur Einbaurichtung bzw. zur Durchströmungsrichtung und/oder parallel zu den An- und Abströmflächen abzudichten, d. h. in Radialrichtung dichtend anleg- und elastisch verformbar zu sein. Das zweite Dichtelement wird dabei in Relation zu einem Radialdichtsitz im Übermaß ausgeführt, so dass eine insbesondere elastische Verformung senkrecht zur Einbaurichtung erfolgt, wenn das zweite Dichtelement in die Dichtposition überführt wird. Ein Radialdichtelement ist unabhängig von der Axialposition, so dass Einbautoleranzen ausgeglichen werden können, die insbesondere dann in größerem Maße auftreten, wenn die Anlageflächen des ersten und zweiten Dichtelements an unterschiedlichen Gegenteilen angeordnet sind, welche zueinander eine Lagetoleranz aufweisen.

Hierbei, aber auch unabhängig von den o. g. Merkmalen, ist es besonders vorteilhaft, wenn das zweite Dichtelement auf der von dem ersten Dichtelement abgewandten Seite des mindestens einen Rastelements und bevorzugt beabstandet von diesen angeordnet ist. Ebenfalls ist es auch unabhängig von den o. g. Merkmalen besonders vorteilhaft, wenn das zweite Dichtelement die Rastelemente nicht überragt, um beim Einbau nicht mit den korrespondierenden Rasteinrichtungen eines Gehäuses, insbesondere die Kante einer Einbauöffnung, zu kollidieren. In anderen Worten überragt bevorzugt das mindestens eine Rastelement die zweite Dichteinrichtung in radialer Richtung. Dem folgend ist es weiter vorteilhaft, gehäuseseitig einen Dichtsitz zur Anlage der zweiten Dichteinrichtung bezüglich der Einbauöffnung radial zurückzuversetzen, d. h. kleiner als die Einbauöffnung auszuführen.

Nach einer günstigen Ausgestaltung kann am Befestigungsrahmen des Filtermoduls wenigstens ein Haltegriff vorgesehen sein, mit dem das wenigstens eine Rastelement zum Entfernen aus einer Einbauposition lösbar ist, indem der Befestigungsrahmen am Haltegriff aus der Einbauposition entfernbar ist. Durch den Haltegriff kann das Filtermodul in seine Einbauposition in einer Luftfilteranlage geführt und dort verrastet werden und aus der Einbauposition wieder entfernt werden. Dadurch, dass die Verrastung des Filtermoduls an seiner Einbauposition durch den Haltegriff und nicht am wenigstens einen Rastelement selbst gelöst werden muss, kann das erste Dichtelement an der Rahmenwand des Befestigungsrahmens umlaufend geschlossen sein und muss nicht an dem Rastelement, oder an den Rastelementen, falls mehrere Rastelemente vorgesehen sind, unterbrochen sein. Dies vereinfacht die Montage und Demontage des Filtermoduls. Vorteilhafterweise können mehrere Rastelemente an der Rahmenwand vorgesehen sein.

Nach einer günstigen Ausgestaltung kann der Befestigungsrahmen mit dem Filterelement verklebt sein. Vorteilhaft ist beispielsweise ein Polyurethan-Kleber oder dergleichen. Das Filterelement kann mit dem Befestigungsrahmen vormontiert sein und zusammen mit dem Befestigungsrahmen ausgewechselt werden. Hierbei ist es wesentlich und bevorzugt, dass das Filterelement mit dem Befestigungsrahmen fest, d. h. unverlierbar und bevorzugt dichtend mit dem Befestigungsrahmen verbunden ist, so dass sie als Einheit lageunabhängig ein- und ausbaubar sind und das Filterelement nicht, insbesondere nicht in Einbaurichtung und/oder Durchströmungsrichtung, aus dem Befestigungsrahmen fallen kann.

Nach einer günstigen Ausgestaltung kann die Rahmenwand als Doppelwand ausgebildet sein, mit einer geschlossenen Innenwand und der Außenseite als Außenwand mit dem wenigstens einen Rastelement. Vorteilhaft kann die Innenwand der Rahmenwand dicht geschlossen umlaufend an den Seiten des Filterelements anliegen, während die Außenwand geeignet für das wenigstens eine Rastelement oder für mehrere Rastelemente unterbrochen sein kann.
Nach einer günstigen Ausgestaltung kann das wenigstens eine Rastelement eine Rastnase mit zwei sich in axialer Richtung gegenüberliegenden Schrägflächen aufweisen, die an einer flexiblen Lasche in der Außenseite der Rahmenwand angeordnet ist. Günstigerweise kann eine Neigung der einander in axialer Richtung gegenüberliegenden Schrägflächen so gewählt sein, dass mit der einen Schrägfläche eine zuverlässige Verrastung des oder der Rastelemente und mit der anderen, gegenüberliegenden Schrägfläche ein Lösen der Verrastung möglich ist, wenn das Filtermodul am Haltegriff des Befestigungsrahmens aus seiner Einbauposition gezogen wird. Vorteilhaft schließen die beiden Schrägflächen jeweils mit der Rahmenwand einen Winkel von höchstens 90°, vorzugsweise von höchstens 85°, besonders bevorzugt von höchstens 80° ein. Vorteilhaft ist der Winkel so gewählt, dass eine sichere Verrastung möglich ist. Eine Demontagekraft zur Demontage des Filtermoduls und eine Montagekraft zur Montage des Filtermoduls ist jeweils abhängig von der Anzahl der Rastelemente, von einem Neigungswinkel der entsprechenden Schrägfläche gegenüber der Rahmenwand, der Breite der Rastelemente und der Dicke des Rastelements. Für den jeweiligen Einsatzzweck können die Elemente für die gewünschten Kräfte entsprechend angepasst sein.

Nach einer günstigen Ausgestaltung kann die Rahmenwand mit ihrer Unterkante von einer Oberkante des zweiten Dichtelements mit einem Abstand beabstandet sein. Dies erlaubt einen Ausgleich von Bauteiltoleranzen.

Nach einer günstigen Ausgestaltung kann an den Filterbalg umgebenden seitlichen Stirnseiten umlaufend ein flächig aufgebrachtes Seitenband angeordnet sein, wobei weiter bevorzugt an einer Außenseite des Seitenbandes das zweite Dichtelement als umlaufender Dichtungsring angeordnet ist, und wobei das Seitenband eine über die Reinseite des Filterbalgs überstehende Lasche aufweist, welche Lasche an den Stirnseiten V-förmig zurückgeklappt über dem zweiten Dichtelement angeordnet ist. Die Lasche dient vorteilhaft zum Zentrieren des Filtermoduls und als Einführhilfe für das zweite Dichtelement in seinen Dichtsitz in der Einbauposition. Vorteilhaft kann ein Teil des zur seitlichen Abdichtung des Filterbalgs, insbesondere bei einem zickzackförmig gefalteten Filtermedium, angeordneten Seitenbands, der über eine untere Kante des Filterbalgs, der die Reinseite begrenzt, übersteht, zurückgeklappt sein und so V-förmig zum an den Stirnseiten angebrachten Seitenband abstehend, teilweise über das Dichtelement ragen. Beim Einführen in einen Dichtsitz, z.B. eines Filtergehäuses oder dergleichen, kann diese V-förmige Lasche an das Dichtelement angepresst und zumindest teilweise zwischen Dichtelement und Dichtungssitz eingeklemmt sein, sodass die Lasche damit am Dichtungssitz fest fixiert ist. Damit wird bei der Kombination aus der V-förmig zurückgeklappten Lasche und dem Dichtelement eine Abdichtung des Filtermoduls bei Einbau in eine Einbauposition, sowohl von der Lasche als auch von dem Dichtelement bewirkt. Auf diese Weise ist ein vereinfachter Einschub des Filtermoduls in ein Filtergehäuse oder dergleichen möglich, wodurch der Kraftaufwand zum Einführen des Filtermoduls in seine Einbauposition reduziert wird.

Das zweite Dichtelement, das beispielsweise aus Moosgummi oder Zellkautschuk ausgebildet sein kann und als Rechteckprofil ausgeführt sein kann, wird zweckmäßigerweise auf das Seitenband aufgeklebt. Dafür kann das Dichtelement eine Klebeschicht aufweisen, mit der es auf das Seitenband aufgeklebt sein kann. Alternativ kann das Dichtelement auch direkt als Dichtmittelraupe auf das Seitenband aufgebracht werden. Da der Querschnitt (Breite/Länge) des Filterelementes des Filtermoduls günstigerweise größer als der Querschnitt des Dichtsitzes in der Einbauposition gewählt wird, entsteht eine Überdeckung und das Dichtelement wird beim Einsetzen des Filtermoduls in den Dichtsitz verpresst. Durch das Überlappen der Lasche mit dem Dichtelement wird das Dichtelement vorverpresst und die Kompression beim Einsetzen des Filtermoduls in den Dichtsitz ohne Ablösen des Dichtelements erreicht.

Nach einer günstigen Ausgestaltung kann die Lasche das zweite Dichtelement an einer Außenseite wenigstens teilweise überdecken. Dadurch ist gewährleistet, dass beim Einsetzen des Filtermoduls in einen Dichtsitz die Lasche zwischen Dichtelement und Wand des Dichtsitzes eingeklemmt wird und so sowohl das Einsetzen des Filtermoduls durch eine Vorverpressung des Dichtelements erleichtert als auch eine zusätzliche Dichtwirkung über die Lasche erfolgen kann.

Nach einem weiteren Aspekt der Erfindung wird eine Luftfilteranlage vorgeschlagen, insbesondere eine Innenraumluftfilteranlage, insbesondere eines Fahrzeugs, mit einem erfindungsgemäßen Filtermodul und einem Reinluftkanal, wobei das Filtermodul austauschbar in einer Einbauposition angeordnet ist und welches Filtermodul ein Filterelement in einem Befestigungsrahmen aufweist. Vorteilhaft kann das Filtermodul mit wenigstens einem Rastelement an seiner Rahmenwand direkt mit einem Blechbauteil verrastet werden und wieder leicht aus seiner Einbauposition gelöst werden.

Nach einer günstigen Ausgestaltung kann das Filtermodul beim Einbau in seine Einbauposition einen Toleranzausgleich bereitstellen. Auf ein zusätzliches Bauteil zum Toleranzausgleich kann verzichtet werden

Nach einer günstigen Ausgestaltung kann im eingebauten Zustand des Filtermoduls ein erstes Dichtelement an einem Blechrahmen dichtend anliegen, wenn wenigstens ein Rastelement am Befestigungsrahmen und gleichzeitig ein zweites Dichtelement am Filterelement zur Abdichtung von Rohseite gegen Reinseite an einem Dichtsitz eines Lufteinlasses dichtend anliegt.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Explosionsdarstellung eines Filtermoduls mit Befestigungsrahmen und Filterelement nach einem Ausführungsbeispiel der Erfindung in isometrischer Darstellung;
- Fig. 2: das Filtermodul nach Figur 1 im zusammengesetzten Zustand in isometrische Darstellung;
- Fig. 3: der Befestigungsrahmen des Filtermoduls nach Figur 1 mit Blick auf dessen Unterseite;
- Fig. 4: eine Detailansicht eines Rastelements des Befestigungsrahmens aus Figur 1;
- Fig. 5: in Explosionsdarstellung das Filtermodul aus Figur 1 an einer Luftfilteranlage;
- Fig. 6 bis 8: das Einsetzen des Filtermoduls aus Figur 1 in seine Einbauposition in verschiedenen Stadien als Ausschnitt.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

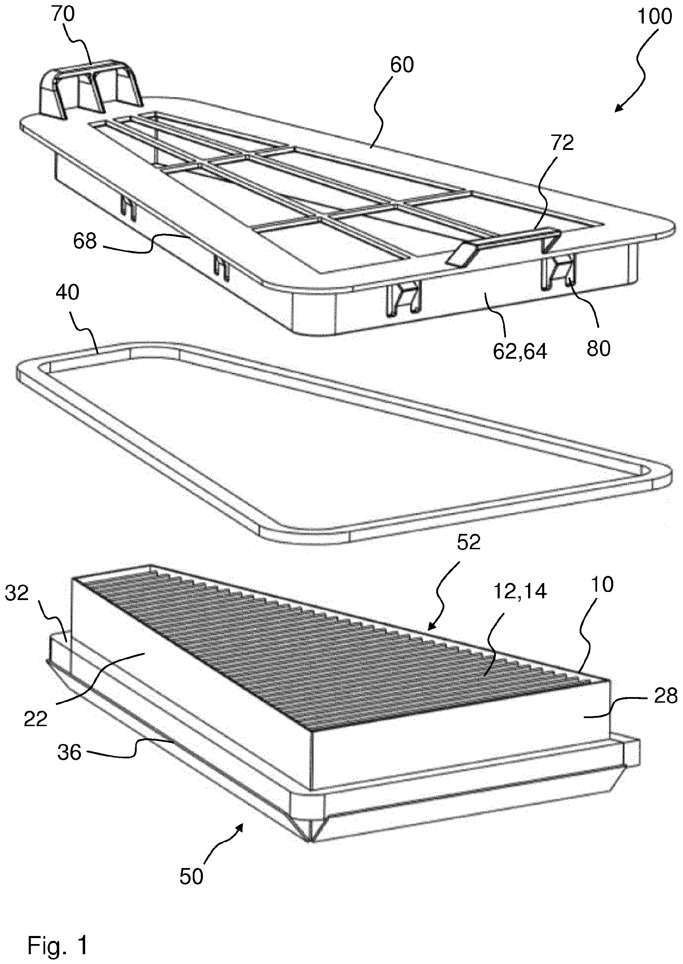

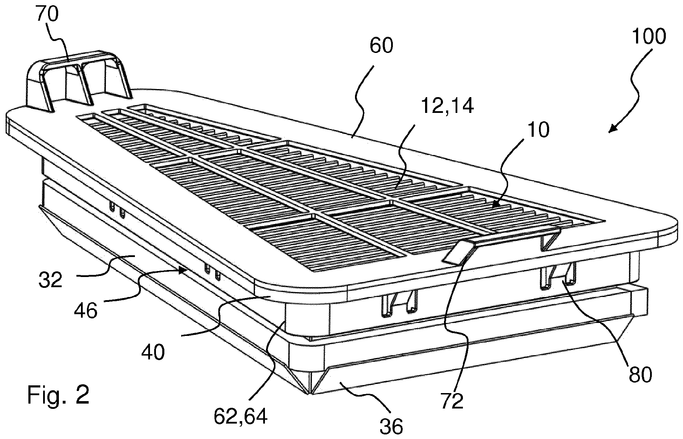

Figur 1 zeigt eine Explosionsdarstellung eines Filtermoduls 100 zum Filtern eines Fluids mit einem Filterelement 10 und einem Befestigungsrahmen 60 nach einem Ausführungsbeispiel der Erfindung in isometrischer Darstellung. Figur 2 zeigt das Filtermodul 100 im zusammengesetzten Zustand für den Einbau in seine Einbauposition. Das Filtermodul 100 umfasst ein Filterelement 10 mit einem Filterbalg 12 aus einem Filtermedium 14 mit einer bestimmungsgemäßen Rohseite 52 und einer dieser gegenüberliegenden bestimmungsgemäßen Reinseite 50.

Der Befestigungsrahmen 60 ist mit dem Filterelement 10 fest verbunden, beispielsweise verklebt, und umschließt umlaufend einen Rand 22 des Filterelements 10 mit einer Rahmenwand 62. An seiner Oberseite, welche die rohluftseitige Oberseite des Filtermoduls 100 bildet, weist der Befestigungsrahmen 60 einen umlaufenden überstehenden Rand 68 auf, von dem die Rahmenwand 62 axial absteht. Innerhalb des Randes 68 weist der Befestigungsrahmen 60 ein Gitter mit großem Raster auf, das im zusammengebauten Zustand das Filterelement 10 überdeckt.

Ein umlaufendes erstes Dichtelement 40 ist an einer Außenseite 64 der Rahmenwand 62 des Befestigungsrahmens 60 unterhalb des Randes 68 angeordnet.
Der Befestigungsrahmen 60 weist an seiner Außenseite 64 mehrere Rastelemente 80 auf. Der Rand 68 steht über die Rastelemente 80 über. Der Rand 68 ist dazu vorgesehen, an einer Einbauöffnung, etwa in einem Montageblech, des Filtermoduls 100 anzuliegen. Die Rastelemente 80 sind in der endgültigen Einbauposition verdeckt.

Am Befestigungsrahmen 60 ist ein Haltegriff 70 vorgesehen, mit dem die Rastelemente 80 zum Entfernen aus einer Einbauposition lösbar sind, indem der Befestigungsrahmen 60 am Haltegriff 70 aus der Einbauposition entfernbar ist. Zur einfacheren Handhabung kann ein weiteres Griffelement 72 vorgesehen sein, der an einer dem Haltegriff 70 gegenüberliegenden Seite des Befestigungsrahmens 60 angeordnet sein kann. Der Befestigungsrahmen 60 weist einen trapezförmigen Querschnitt auf, wobei der Haltegriff 70 an der kleinsten Seite des trapezförmigen Querschnitts angeordnet ist, so dass das Filtermodul 70 leicht aus der Einbauposition herausgezogen werden kann.

Das Filterelement 10 umfasst einen flachen Filterbalg 12 aus einem Filtermedium 14 mit einer bestimmungsgemäßen Rohseite 52 und einer dieser gegenüberliegenden bestimmungsgemäßen Reinseite 50. Der Filterbalg 12 weist aufgestellte Falten so auf, dass jeweils Faltenkanten in der reinseitigen Oberfläche und der rohluftseitigen Oberfläche des Filterelements 10 liegen. Die seitlichen Stirnseiten des Filterelements 10 sind mit einem umlaufenden Seitenband 28 abgedichtet.

An der Außenseite des Seitenbandes 28 ist ein umlaufendes zweites Dichtelement 32 angeordnet. Das Seitenband 28 weist eine über die Reinseite 50 des Filterbalgs 12 überstehende Lasche 36 auf, welche Lasche 36 an den seitlichen Stirnseiten V-förmig zurückgeklappt über das Dichtelement 32 angeordnet ist.

Das Dichtelement 32 kann aus Moosgummi oder Zellkautschuk bestehen, was sich als besonders günstiges Dichtungsmaterial mit geeigneten elastischen Eigenschaften erwiesen hat. Die Lasche 36 überdeckt das Dichtelement 32 an der Außenseite geringfügig, da die Lasche 36 bis zu der der Reinseite 50 zugewandten Kante des Dichtelements 32 heranreichend ausgebildet ist. Das Seitenband 28 ist zweckmäßig zur Bildung der Lasche 36 an einem Umfang der Reinseite 50 umlaufend eingeschnitten oder gestanzt ausgebildet, um so die Lasche zuverlässig zurückklappen zu können. Das Seitenband 28 und die Lasche 36 umfassen ein Vlies oder ein ähnliches textiles Gewebe, da diese Materialien gut dichten und sich leicht verarbeiten lassen.

Im zusammengesetzten Zustand (Figur 2) ist der Befestigungsrahmen 60 mit dem Filterelement 10 verbunden, wobei zwischen der Unterkante der Rahmenwand 62 und der Oberkante des zweiten Dichtelements 32 ein Abstand 46 ausgebildet ist, der beim Einbau in eine Einbauposition des Filtermoduls 100 einen Ausgleich von Bauteiltoleranzen in axialer Richtung ermöglicht.

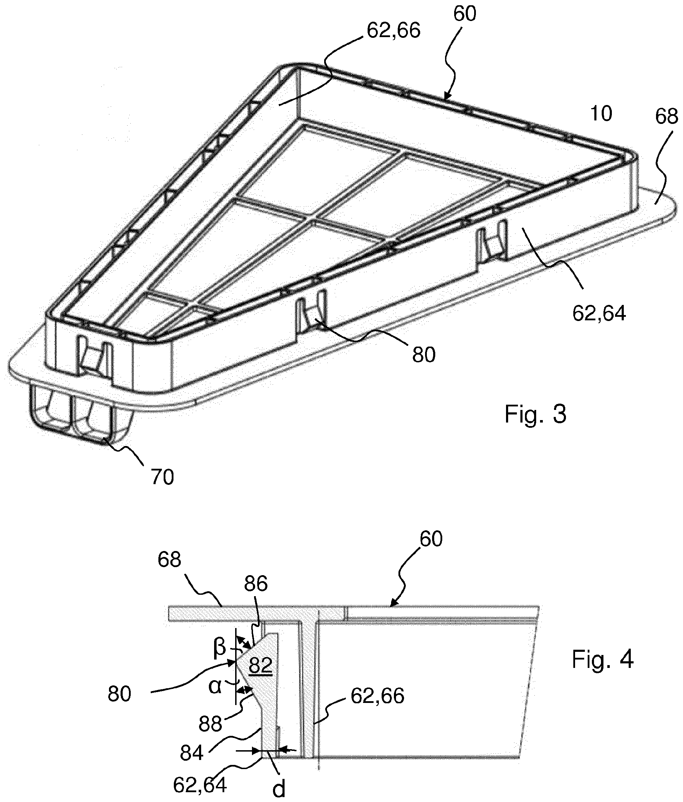

Figur 3 zeigt eine Untersicht des Befestigungsrahmens 60 des Filtermoduls 100 nach Figur 1. Die Rahmenwand 62 ist als Doppelwand ausgebildet und weist eine Außenwand als Außenseite 64 und eine Innenwand 66 auf. Die Innenwand ist geschlossen, während die Außenwand durch die Rastelemente 80, in diesem Beispiel sieben Rastelemente 80, die am Umfang der Rahmenwand 62 verteilt angeordnet sind, unterbrochen ist.

Figur 4 zeigt eine Detailansicht eines Rastelements 80 des Befestigungsrahmens 60 aus Figur 1. Das Rastelement 80 weist eine Rastnase 82 mit zwei Schrägflächen 86, 88 auf, die an einer flexiblen Lasche 84 in der Außenseite 64 der Rahmenwand 62 angeordnet ist. Die obere Schrägfläche 86 weist einen Winkel β gegenüber der axialen Richtung senkrecht zum Rand 68 des Befestigungsrahmens 60 auf. Der Winkel β bestimmt zusammen mit der Zahl der Rastelemente 80, deren Breite und der Dicke d der Lasche 84 die Demontagekraft für das Filtermodul 100 zum Entfernen des Filtermoduls 100 aus seiner Einbauposition.

Die untere Schrägfläche 88 weist einen Winkel α gegenüber der axialen Richtung auf. Der Winkel α bestimmt zusammen mit der Zahl der Rastelemente 80, deren Breite und der Dicke d der Lasche 84 die Montagekraft zum Einsetzen des Filtermoduls 100 in seine Einbauposition.

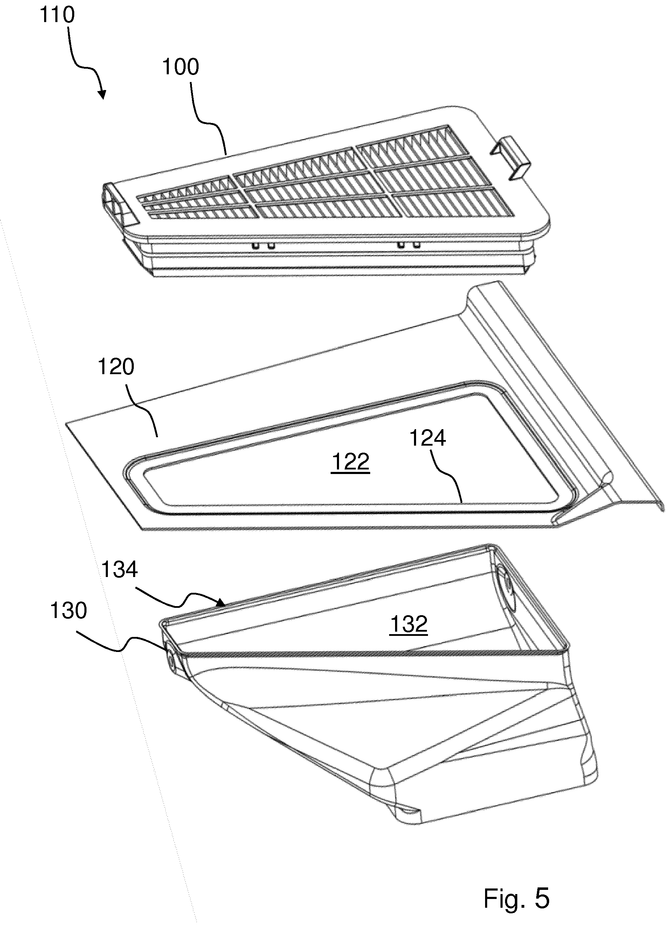

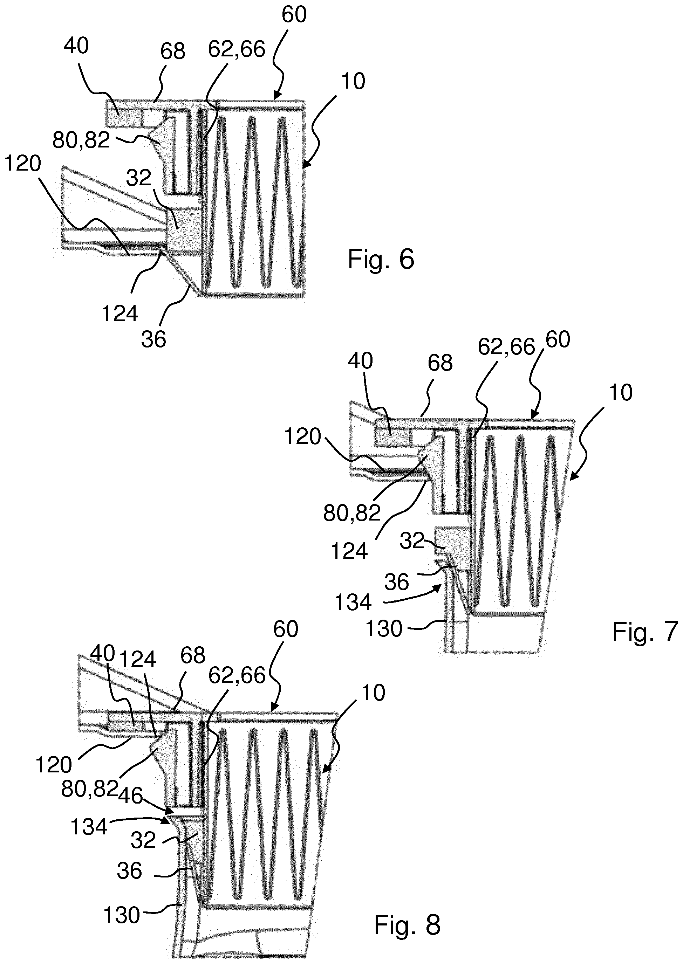

Figur 5 zeigt in Explosionsdarstellung ein Filtermodul 100 und einen Ausschnitt einer Luftfilteranlage 110 mit Montageblech 120 und Reinluftkanal 130, in welche das Filtermodul 100 einzusetzen ist. Die Figuren 6 bis 8 illustrieren verschiedene Stadien beim Einsetzen des Filtermoduls 100 aus Figur 1 in seine Einbauposition in der Luftfilteranlage 110 anhand von Detailansichten.

Das Montageblech 120 der Luftfilteranlage 110 weist eine Öffnung 122 mit einer nach unten abgesetzten Kante 124 auf, an der das erste Dichtelement 40 des Filtermoduls 100 zur Anlage kommen soll. Ein als Schlauch ausgebildeter Reinluftkanal 130 weist einen Dichtsitz 134 für das zweite Filterelement 32 des Filtermoduls 100 auf. Der Reinluftkanal 130 ist mit einem Befestigungselement (nicht dargestellt) am Montageblech 120 festgelegt und mit seiner Öffnung 132 von diesem beabstandet.

Zunächst wird das Filtermodul 100 mit seinem reinluftseitigen Ende mit dem zweiten Dichtelement 32 voran vorbei an der Kante 124 in die Öffnung 122 eingeführt (Figur 6). Die V-förmige Lasche 36 an der Unterseite des Filtermoduls 100 dient dabei als Einführhilfe.

Beim weiterem Einführen des Filtermoduls 100 gelangt das jeweilige Rastelement 80 mit seiner Rastnase 82 in Kontakt mit der Kante 124 des Montageblechs 120 (Figur 7) und weicht entsprechend seiner Einführschräge (Schrägfläche 88, Figur 4) elastisch zur Innenwand 66 der Rahmenwand 62 des Befestigungsrahmens 60 aus. Dadurch kann das Filtermodul 100 weiter in die Öffnung 122 des Montageblechs 120 eingeführt werden. Das untere Ende des Filtermoduls 100 gerät dabei in Kontakt mit der Öffnung 132 des Reinluftkanals 130, und wird mittels der V-förmig umgeschlagenen Laschen 36 zentriert, welche auch als Einführhilfe für das zweite Dichtelement 32 in den Dichtsitz 134 dienen. Die Laschen 36 bewirken eine Verpressung des zweiten Dichtelements 32, so dass dieses sicher in den Dichtsitz 134 gleiten kann.

Die Rastnase 82 schnappt bei weiterem Einführen des Filtermoduls 100 unter die Kante 124 des Montageblechs 120, während das zweite Dichtelement 32 weiter in den Dichtsitz 134 des Reinluftkanals 130 gleitet und den Reinluftkanal 130 dicht abschließt (Figur 8). Das erste Dichtelement 40 wird zwischen dem Rand 68 des Befestigungsrahmens und dem Montageblech 120 eingeklemmt und kann auf diese Weise eine Vorspannung erzeugen, so dass das Filtermodul 100 vibrationssicher in seiner endgültigen Einbauposition gehalten ist.

## Patentansprüche

1. Filtermodul (100) zum Filtern eines Fluids, umfassend
- wenigstens ein Filterelement (10) mit einem Filterbalg (12) aus einem Filtermedium (14) mit einer bestimmungsgemäßen Rohseite (52) und einer dieser gegenüberliegenden bestimmungsgemäßen Reinseite (50),
- einen Befestigungsrahmen (60), der mit dem Filterelement (10) verbunden ist und der einen Rand (22) des Filterelements (10) mit einer Rahmenwand (62) umlaufend wenigstens teilweise umschließt,
- ein umlaufendes erstes Dichtelement (40), welches an einer Außenseite (64) der Rahmenwand (62) des Befestigungsrahmen (60) angeordnet ist,
- wobei der Befestigungsrahmen (60) an seiner Außenseite (64) wenigstens ein Rastelement (80) aufweist,
wobei ein zweites Dichtelement (32) zum Dichten zwischen Rohseite (50) und Reinseite (52) am Filterelement (10) angeordnet ist, das mit Verrasten des wenigstens einen Rastelements (80) in seine Dichtposition führbar ist und wobei das erste Dichtelement (40) als Axialdichtelement und das zweite Dichtelement (32) als Radialdichtelement ausgeführt ist.

2. Filtermodul nach Anspruch 1, wobei am Befestigungsrahmen (60) wenigstens ein Haltegriff (70) vorgesehen ist, mit dem das wenigstens eine Rastelement (80) zum Entfernen aus einer Einbauposition lösbar ist, indem der Befestigungsrahmen (60) am Haltegriff (70) aus der Einbauposition entfernbar ist.

3. Filtermodul nach Anspruch 1 oder 2, wobei der Befestigungsrahmen (60) mit dem Filterelement (10) fest verbunden, insbesondere verklebt ist.

4. Filtermodul nach einem der vorhergehenden Ansprüche, wobei die Rahmenwand (62) als Doppelwand ausgebildet ist, mit einer geschlossenen Innenwand (62) und der Außenseite (64) als Außenwand mit wenigstens einem Rastelement (80).

5. Filtermodul nach einem der vorhergehenden Ansprüche, wobei das Rastelement (80) eine Rastnase (82) mit zwei sich in axialer Richtung gegenüberliegenden Schrägflächen (86, 88) aufweist, die an einer flexiblen Lasche (84) in der Außenseite (64) der Rahmenwand (62) angeordnet ist.

6. Filtermodul nach einem der vorhergehenden Ansprüche, wobei die Rahmenwand (62) mit ihrer Unterkante von einer Oberkante des zweiten Dichtelements (32) mit einem Abstand (46) beabstandet ist.

7. Filtermodul nach einem der vorhergehenden Ansprüche, wobei an den Filterbalg (12) umgebenden seitlichen Stirnseiten umlaufend ein flächig aufgebrachtes Seitenband (28) angeordnet ist, wobei an einer Außenseite des Seitenbandes (28) das zweite Dichtelement (32) umlaufend angeordnet ist, und wobei das Seitenband (28) eine über die Reinseite (50) des Filterbalgs (12) überstehende Lasche (36) aufweist, welche Lasche (36) an den Stirnseiten V-förmig zurückgeklappt über dem zweiten Dichtelement (32) angeordnet ist.

8. Filtermodul nach Anspruch 7, wobei die Lasche (36) das Dichtelement (32) an einer Außenseite wenigstens teilweise überdeckt.

9. Luftfilteranlage (110), insbesondere Innenraumluftfilteranlage, mit einem Filtermodul (100) nach einem der vorhergehenden Ansprüche und einer Reinluftversorgung (130), wobei das Filtermodul (100) austauschbar in einer Einbauposition angeordnet ist und welches Filtermodul (100) ein Filterelement (10) in einem Befestigungsrahmen (60) vorsieht.

10. Luftfilteranlage nach Anspruch 9, wobei im eingebauten Zustand des Filtermoduls (100) ein erstes Dichtelement (40) an einem Blechrahmen (120) dichtend anliegt, wenn Rastelemente (80) am Befestigungsrahmen (60) und gleichzeitig ein zweites Dichtelement (32) am Filterelement (10) zur Abdichtung von Rohseite (52) gegen Reinseite (50) an einem Dichtsitz eines Lufteinlasses (132) dichtend anliegen.

## Claims

1. Filter module (100) for filtering a fluid, comprising
- at least one filter element (10) with a filter bellows (12) made of a filter medium (14) with an intended raw side (52) and an intended clean side (50) opposing the raw side,
- a mounting frame (60) connected to the filter element (10) and enclosing an edge (22) of the filter element (10) circumferentially at least partially with a frame wall (62),
- a circumferential first sealing element (40) which is disposed on an exterior side (64) of the frame wall (62) of the mounting frame (60),
- wherein the mounting frame (60) features at least one latching element (80) on its exterior side (64),
wherein a second sealing element (32), which can be guided into its sealing position by latching the at least one latching element (80), is disposed at the filter element (10) for sealing between raw side (50) and clean side (52) and wherein the first sealing element (40) is designed as an axial sealing element and the second sealing element (32) as a radial sealing element.

2. Filter module according to claim 1, wherein at the mounting frame (60) at least one handle (70) is provided with which the at least one latching element (80) can be detached for removing it from a mounting position so that the mounting frame (60) can be removed from the mounting position by the handle (70).

3. Filter module according to claim 1 or 2, wherein the mounting frame (60) is firmly connected, in particular glued, to the filter element (10).

4. Filter module according to one of the preceding claims, wherein the frame wall (62) is designed as double wall, with a closed inner wall (62) and the exterior side (64) as outer wall with at least one latching element (80).

5. Filter module according to one of the preceding claims, wherein the latching element (80) features a latching lug (82), which is disposed on a flexible tab (84) in the exterior side (64) of the frame wall (62), with two axially opposed inclined planes (86, 88) .

6. Filter module according to one of the preceding claims, wherein the frame wall (62) with its lower edge is spaced at a distance (46) from an upper edge of the second sealing element (32).

7. Filter module according to one of the preceding claims, wherein a flatly applied lateral strip (28) is disposed circumferentially on the lateral front sides surrounding the filter bellows (12), wherein the second sealing element (32) is disposed circumferentially on an exterior side of the lateral strip (28), and wherein the lateral strip (28) features a tab (36) projecting beyond the clean side (50) of the filter bellows (12), which tab (36) is disposed at the front sides, folded back in a V-shape, above the second sealing element (32).

8. Filter module according to claim 7, wherein the tab (36) covers the sealing element (32) at least partially on an exterior side.

9. Air filter installation (110), in particular cabin air filter installation, having a filter module (100) according to one of the preceding claims and a clean air supply (130), wherein the filter module (100) is disposed exchangeably in a mounting position and which filter module (100) provides a filter element (10) in a mounting frame (60).

10. Air filter installation according to claim 9, wherein, in the installed state of the filter module (100), a first sealing element (40) abuts a sheet-metal frame (120) sealingly when latching elements (80) on the mounting frame (60) and simultaneously a second sealing element (32) on the filter element (10) sealingly abut a sealing seat of an air inlet (132) for sealing the raw side (52) against the clean side (50).

## Revendications

1. Module de filtration (100) destiné à filtrer un fluide, comprenant
- au moins un élément filtrant (10) avec un soufflet de filtre (12) constitué d'un milieu filtrant (14) avec un côté brut (52) conforme à l'utilisation et un côté pur (50) conforme à l'utilisation opposé au côté brut,
- un cadre de fixation (60) relié à l'élément filtrant (10) et qui entoure au moins partiellement un bord (22) de l'élément filtrant (10) avec une paroi de cadre (62) en sens circonférentiel,
- un premier élément d'étanchéité circonférentiel (40) qui est disposé sur une face extérieure (64) de la paroi de cadre (62) du cadre de fixation (60),
- dans lequel le cadre de fixation (60) présente sur sa face extérieure (64) au moins un élément d'encliquetage (80),
dans lequel un second élément d'étanchéité (32), qui peut être guidé dans sa position d'étanchéité en verrouillant l'élément d'encliquetage (80), au moins au nombre d'un, est disposé sur l'élément filtrant (10) pour assurer l'étanchéité entre le côté brut (50) et le côté pur (52), et dans lequel le premier élément d'étanchéité (40) est exécuté en tant qu'élément d'étanchéité axial et le second élément d'étanchéité (32) en tant qu'élément d'étanchéité radial.

2. Module de filtration selon la revendication 1, dans lequel une poignée de maintien (70) est prévue sur le cadre de fixation (60), avec laquelle l'élément d'encliquetage (80), au moins au nombre d'un, peut être libéré pour être retiré d'une position de montage alors que le cadre de fixation (60) peut être retiré de la position de montage par la poignée de maintien (70).

3. Module de filtration selon la revendication 1 ou 2, dans lequel le cadre de fixation (60) est solidement fixé, notamment collé, à l'élément filtrant (10).

4. Module de filtration selon l'une des revendications précédentes, dans lequel la paroi de cadre (62) est réalisée en tant que double paroi, avec une paroi intérieure fermée (62) et la face extérieure (64) en tant que paroi extérieure avec au moins un élément d'encliquetage (80).

5. Module de filtration selon l'une des revendications précédentes, dans lequel l'élément d'encliquetage (80) présente un ergot d'encliquetage (82), qui est disposé sur une patte flexible (84) dans la face extérieure (64) de la paroi de cadre (62), avec deux surfaces obliques (86, 88) opposées axialement.

6. Module de filtration selon l'une des revendications précédentes, dans lequel la paroi de cadre (62) avec son bord inférieur est espacée d'un bord supérieur du second élément d'étanchéité (32) à une certaine distance (46).

7. Module de filtration selon l'une des revendications précédentes, dans lequel une bande latérale (28) appliquée à plat est disposée circonférentiellement sur les faces frontales latérales entourant le soufflet de filtre (12), dans lequel le second élément d'étanchéité (32) est disposé circonférentiellement sur une face extérieure de la bande latérale (28), et dans lequel la bande latérale (28) présente une patte (36) dépassant du côté pur (50) du soufflet de filtre (12), laquelle patte (36) est disposée sur les faces frontales et repliée en arrière en forme de V au-dessus du second élément d'étanchéité (32).

8. Module de filtration selon la revendication 7, dans lequel la patte (36) recouvre au moins partiellement l'élément d'étanchéité (32) sur une face extérieure.

9. Installation de filtre à air (110), en particulier installation de filtre à air d'habitacle, avec un module de filtration (100) selon l'une des revendications précédentes et une alimentation en air pur (130), dans laquelle le module de filtration (100) est disposé de manière échangeable dans une position de montage et ledit module de filtration (100) fournit un élément filtrant (10) dans un cadre de fixation (60).

10. Installation de filtre à air selon la revendication 9, dans laquelle, à l'état monté du module de filtration (100), un premier élément d'étanchéité (40) s'appuie de manière étanche contre un cadre en tôle (120) lorsque des éléments d'encliquetage (80) situés sur le cadre de fixation (60) et simultanément un second élément d'étanchéité (32) situé sur l'élément filtrant (10) s'appuient de manière étanche contre un siège d'étanchéité d'une admission d'air (132) pour assurer l'étanchéité entre le côté brut (52) et le côté pur (50).
